# DEMANDE DE BREVET EUROPEEN

(11) **EP 1 524 432 A1**
(43) Date de publication de la demande: **20.04.2005**
(21) Numéro de dépôt: 03293096.8
(22) Date de dépôt: 10.12.2003
(51) Int. Cl.: F03D 7/02

(54) **Mât d'éolienne articulé**

(30) Priorité: 17.10.2003 FR 0312184
(71) Demandeur: Société Française des Alizés, 78602 Maisons Laffitte (FR)
(72) Inventeur: Duguet, Olivier, 78600 Maisons Laffitte (FR); Jailloux, Jean-Marc, 95110 Sannois (FR)
(74) Mandataire: Rousset, Jean-Claude

(57) **Abrégé**

Le mât (2) de l'éolienne est formé d'au moins deux segments (13, 15) articulés entre eux de manière à pivoter entre une position dressée et une position repliée. Le pivotement des deux segments (13, 15) est coordonné de manière qu'ils forment toujours un même angle a₁ avec la verticale, permettant au centre de gravité de l'éolienne de se maintenir dans l'alignement vertical du segment inférieur 11. L'éolienne peut ainsi être repliée en cas de grand vent dans des conditions de sécurité optimale et avec un encombrement réduit.

## Description

L'invention concerne une éolienne comprenant un mât articulé de manière à prendre une position dressée dans laquelle il s'étend sensiblement verticalement au-dessus d'une fondation ancrée au sol et une position repliée proche du sol, et un rotor muni de pales monté au voisinage du sommet du mât de manière à tourner autour d'un axe sensiblement horizontal lorsque le mât est dans la position dressée.

JP 62282178 A et FR2 823 784 A décrivent des éoliennes dont le mât présente une articulation unique proche du sol qui permet de rabattre le mât au sol en cas de vent violent. Les dispositifs décrits comportent un mât auxiliaire et un système de câbles reliant les deux mâts, dont le maniement est dangereux par grand vent. De plus, les dispositifs décrits impliquent un encombrement au sol important, surtout quand le mât articulé est rabattu.

Le but de l'invention est de permettre le repliement du mât d'une éolienne de manière que celle-ci ne subisse pas de dommage en cas de vent violent, en évitant les inconvénients de la technique antérieure.

L'invention vise notamment une éolienne du genre défini en introduction, et prévoit que le mât comprend au moins deux segments mobiles articulés autour d'axes sensiblement horizontaux et sensiblement parallèles entre eux, de manière à pivoter dans un sens donné depuis la position dressée, ledit sens de pivotement étant inversé d'une articulation à la suivante, des moyens étant prévus pour coordonner le pivotement des différents segments de manière que le centre de gravité de l'éolienne reste sensiblement au-dessus de la fondation.

L'invention ne nécessite aucun élément augmentant sensiblement sa surface au sol lorsque le mât est dressé. Lorsque le mât est replié, sa configuration à au moins deux segments mobiles réduit sensiblement l'encombrement au sol de l'éolienne. Le maintien du centre de gravité de l'éolienne au-dessus de la fondation sur laquelle elle s'appuie assure la stabilité de l'éolienne pendant les opérations de repliement et de dépliement.

Des caractéristiques optionnelles de l'invention, complémentaires ou de substitution, sont énoncées ci-après:
- Le pivotement des segments mobiles est coordonné de manière qu'ils forment avec la verticale des angles respectifs a₁ égaux en valeur absolue et la position des articulations est déterminée par la répartition des masses du support articulé de façon à maintenir le centre de gravité au droit de la fondation.
- Le mât comprend en outre un segment inférieur fixe sensiblement vertical, sur lequel est articulé l'un des segments mobiles.
- Les moyens pour coordonner le pivotement des segments comprennent des vérins hydrauliques dont chacun commande l'angle de pivotement mutuel de deux segments consécutifs.
- Le pivotement d'un segment mobile est commandé par deux vérins hydrauliques disposés sensiblement symétriquement l'un de l'autre par rapport au plan dans lequel se déplacent les axes longitudinaux des segments.
- Les vérins hydrauliques opèrent sensiblement dans la direction verticale.
- Les segments mobiles s'étendent sensiblement horizontalement dans la position repliée.
- Dans la position repliée, les pales sont situées au-dessus du segment supérieur.
- Dans la position repliée, les pales sont situées au-dessous du segment supérieur, le rotor étant disposé de manière à ne pas entraver le pivotement des segments.
- Des moyens sont prévus pour immobiliser le rotor en rotation, dans la position repliée et au cours du pivotement des segments, dans une orientation telle que, dans la position repliée des segments, au moins un segment intermédiaire se loge dans l'angle formé par deux pales consécutives.

Les caractéristiques et avantages de l'invention sont exposés plus en détail dans la description ci-après, avec référence aux dessins annexés.

Les figures 1 et 2 sont des vues en élévation, respectivement de face et de côté, d'une éolienne selon l'invention dont le mât est en position dressée.

Les figures 3 et 4 sont des vues analogues à la figure 2, montrant le mât dans une position intermédiaire et dans la position repliée respectivement.

La figure 5 est un schéma illustrant les angles de pivotement des segments du mât.

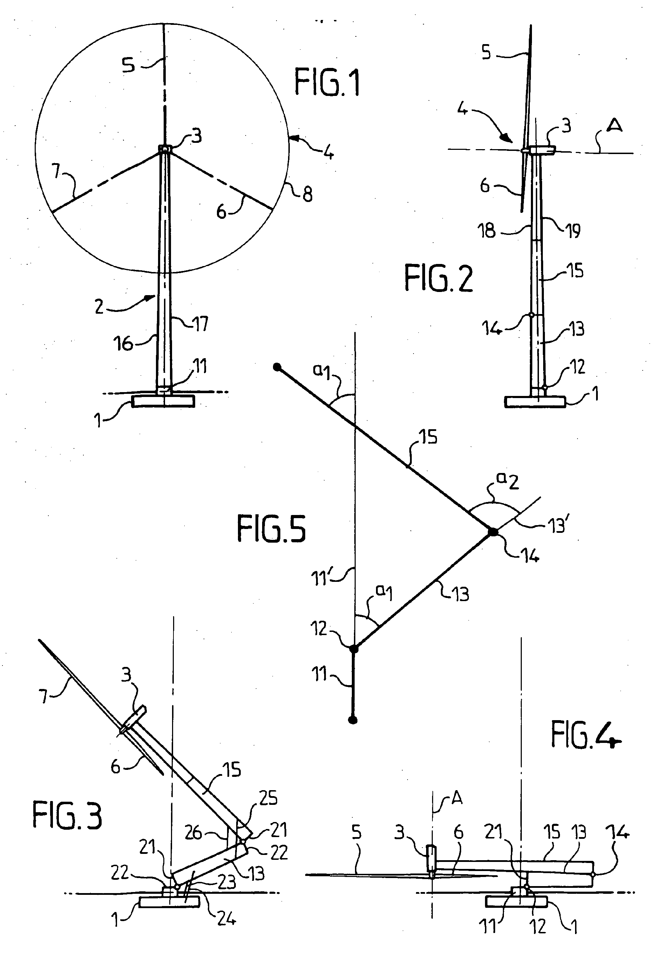

L'éolienne illustrée comprend de manière classique une base ou fondation 1 en béton armé ayant des dimensions horizontales de quelques mètres, destinée à être ancrée au sol, un mât 2 qui, dans l'état représenté sur les figures 1 et 2 s'élève verticalement au-dessus de la base 1, un support 3, appelé nacelle, monté au sommet du mât et supportant un rotor 4 propre à tourner autour d'un axe A approximativement horizontal. Le rotor comprend trois pales 5, 6, 7, qui sont représentés schématiquement sur la figure 1 par des lignes radiales en traits mixtes, et par un cercle 8 qui constitue le lieu géométrique des extrémités des pales lors de la rotation du rotor. Le rotor peut également tourner à la manière d'une girouette autour de l'axe vertical du mât.

Selon l'invention, le mât 2 est formé de trois segments articulés entre eux autour d'axes sensiblement horizontaux, sensiblement parallèles entre eux. Un premier segment fixe 11, solidaire de la base 1, très court dans l'exemple des figures 1 à 4, est articulé autour d'un axe 12 à un second segment 13, lui-même articulé autour d'un axe 14 à un troisième segment 15 portant la nacelle 3. Le mât 2 présente la forme générale d'un tronc de cône dont la génératrice est très peu inclinée par rapport à la verticale.

Les axes d'articulation 12 et 14 sont sensiblement tangents au mât de part et d'autre de celui-ci. Ceci permet aux segments 13 et 15 de pivoter respectivement vers la droite et vers la gauche par rapport à leur orientation verticale, comme on le voit sur la figure 3, la face inférieure 21, initialement horizontale, de chacun d'eux formant un angle de plus en plus ouvert avec la face supérieure 22 du segment sous-jacent. Dans l'exemple illustré, ce mouvement de pivotement est commandé par des vérins hydrauliques, à savoir deux vérins 23, 24 agissant entre la base 1 et le segment 13 et deux vérins 25, 26 agissant entre les segments 13 et 15. Ce pivotement peut se poursuivre jusqu'à la position montrée sur la figure 4, dans laquelle les segments 13 et 15 s'étendent sensiblement horizontalement pour une prise au vent minimale. Dans l'exemple illustré, les pales sont alors situées au-dessous du segment 15, et sensiblement à la hauteur du segment 13. La distance libre entre l'axe A du rotor et la face inférieure 21 du segment 13 étant inférieur au rayon des pales, le rotor est immobilisé, pendant l'opération de repliement et à l'état replié, de manière que les pales 6 et 7 soient disposées sensiblement symétriquement de part et d'autre du plan contenant les axes longitudinaux des segments, la pale 5 étant tournée à l'opposé du segment 13. On évite ainsi tout contact entre les pales et les segments du mât pendant les manoeuvres de repliement et de dépliement et à l'état replié. Bien entendu, le mouvement de girouette du rotor est également bloqué pour maintenir l'axe A perpendiculaires aux axes 12 et 14.

Les vérins 23 à 26 sont commandés en synchronisme de manière à respecter en permanence une relation déterminée entre les angles a₁ et a₂ indiqués sur la figure 5, l'angle a₁ étant l'angle de pivotement de l'articulation 12, c'est-à-dire l'angle entre le segment 13 et le prolongement 11' du segment 11 vers le haut, et l'angle a₂ étant l'angle de pivotement de l'articulation 14, c'est-à-dire l'angle entre le segment 15 et le prolongement vers le haut 13' du segment 13. L'angle a₂ doit être égal au double de l'angle a₁, les segments 13 et 15 étant ainsi inclinés du même angle a₁ par rapport à la verticale. Les hauteurs respectives des segments 13 et 15 sont choisies, compte tenu de la masse de la nacelle et du rotor, de telle manière que le centre de gravité de l'ensemble mobile, et par conséquent de l'éolienne dans sa totalité, se situe sensiblement dans l'alignement vertical du segment fixe 11, et en tout cas au-dessus de la base 1. En raison de la relation angulaire énoncée ci-dessus, le centre de gravité de l'ensemble mobile se déplace sur une droite verticale, de sorte que son positionnement tel qu'il vient d'être défini reste vérifié pendant toute les manoeuvres de repliement et de dépliement. Le repliement peut donc s'effectuer en toute sécurité même par un vent déjà fort.

L'éolienne qui vient d'être décrite peut être obtenue notamment en modifiant une éolienne à mât monobloc disponible dans le commerce. Pour cela, on sectionne le mât aux endroits voulus. Chaque articulation est formée par deux demi-viroles fixées respectivement aux deux segments concernés pour recevoir un arbre. Ces demi-viroles renforcent les extrémités des tronçons de mât à l'endroit de leur coupure. Les articulations sont de préférence bloquées dans la position dressée lorsque l'éolienne fonctionne, par des moyens mécaniques télécommandés tels que des systèmes vis-écrous ou des clavettes. Les commandes de blocage et de déblocage des articulations peuvent être assurées par exemple par des vérins ou moteurs hydrauliques ou électriques.

Outre sa fonction de sécurité en cas de vent violent, l'invention facilite le montage de l'éolienne, la mise en place de la nacelle et du rotor sur le mât pouvant être effectuée dans l'état replié de celui-ci.

Le segment fixe du mât, représenté très court sur les figures 1 à 4 et plus long sur la figure 5, peut être totalement supprimé, le premier axe d'articulation étant installé directement sur la fondation.

L'invention s'applique notamment, sans y être limitée, à des éoliennes dont le mât a une masse de l'ordre de 40 tonnes et une hauteur de plus de 45 mètres et supporte des éléments (nacelle, rotor), d'une masse de l'ordre de 20 à 50 tonnes. Le diamètre du rotor est de l'ordre de 50 mètres. L'éolienne peut supporter des vents d'environ 150 km/h, au niveau de l'axe du rotor, en position dressée, de 60 à 70 km/h pendant la manoeuvre de repliement et de l'ordre de 300 km/h en position repliée. Le segment fixe vertical, lorsqu'il existe peut présenter une hauteur de 3 à 5 mètres de manière à accepter l'instrumentation qui se trouve généralement au pied des éoliennes existantes.

Des modifications peuvent être apportées aux modes de réalisation décrits et représentés sans sortir de l'invention. Ainsi, chacune des paires de vérins 23, 24 et 25, 26 peut être remplacée par un vérin unique. Le pivotement des segments de mât peut être commandé par d'autres moyens que des vérins hydrauliques, par exemple des systèmes vis-écrous actionnés par des moteurs électriques ou hydrauliques. Le synchronisme entre les deux articulations peut être réalisé par des systèmes à chaîne et roues dentées. Le mât peut comporter plus de deux articulations, les segments mobiles étant disposés en zigzag au cours du repliement et formant tous un même angle a₁ en valeur absolue avec la verticale. Les pales du rotor peuvent être tournées vers le haut par rapport au dernier segment du mât dans la position repliée, auquel cas l'orientation des pales autour de l'axe du rotor peut être quelconque.

## Revendications

1. Éolienne comprenant un mât (2) articulé de manière à prendre une position dressée dans laquelle il s'étend sensiblement verticalement au-dessus d'une fondation ancrée au sol et une position repliée proche du sol, et un rotor (4) muni de pales (5-7) monté au voisinage du sommet du mât de manière à tourner autour d'un axe (A) sensiblement horizontal lorsque le mât est dans la position dressée, **caractérisée en ce que** le mât comprend au moins deux segments mobiles (13, 15) articulés autour d'axes (12, 14) sensiblement horizontaux et sensiblement parallèles entre eux, de manière à pivoter dans un sens donné depuis la position dressée, ledit sens de pivotement étant inversé d'une articulation à la suivante, des moyens (23-26) étant prévus pour coordonner le pivotement des différents segments de manière que le centre de gravité de l'éolienne reste sensiblement au-dessus de la fondation.

2. Éolienne selon la revendication 1, dans laquelle le pivotement des segments mobiles est coordonné de manière qu'ils forment avec la verticale des angles respectifs a₁ égaux en valeur absolue et la position des articulations est déterminée par la répartition des masses du support articulé de façon à maintenir le centre de gravité au droit de la fondation.

3. Éolienne selon l'une des revendications 1 et 2, dans laquelle le mât comprend en outre un segment inférieur fixe (11) sensiblement vertical, sur lequel est articulé l'un (13) des segments mobiles.

4. Éolienne selon l'une des revendications précédentes, dans laquelle les moyens pour coordonner le pivotement des segments comprennent des vérins hydrauliques (23-26) dont chacun commande l'angle de pivotement mutuel de deux segments consécutifs.

5. Éolienne selon la revendication 4, dans laquelle le pivotement d'un segment mobile (13) est commandé par deux vérins hydrauliques (25, 26) disposés sensiblement symétriquement l'un de l'autre par rapport au plan dans lequel se déplacent les axes longitudinaux des segments.

6. Éolienne selon l'une des revendications 4 et 5, dans laquelle les vérins hydrauliques (25, 26) opèrent sensiblement dans la direction verticale.

7. Éolienne selon l'une des revendications précédentes, dans laquelle les segments mobiles (13, 15) s'étendent sensiblement horizontalement dans la position repliée.

8. Éolienne selon l'une des revendications précédentes, dans laquelle, dans la position repliée, les pales (5, 6, 7) sont situées au-dessus du segment supérieur.

9. Éolienne selon l'une des revendications 1 à 7, dans laquelle, dans la position repliée, les pales sont situées au-dessous du segment supérieur, le rotor étant disposé de manière à ne pas entraver le pivotement des segments.

10. Éolienne selon la revendication 9, dans laquelle des moyens sont prévus pour immobiliser le rotor en rotation, dans la position repliée et au cours du pivotement des segments, dans une orientation telle que, dans la position repliée des segments, au moins un segment intermédiaire (13) se loge dans l'angle formé par deux pales consécutives (6, 7).
